# EUROPÄISCHE PATENTSCHRIFT

(11) **EP 0 580 823 B1**
(45) Veröffentlichungstag und Bekanntmachung des Hinweises auf die Patenterteilung: **07.02.1996**
(21) Anmeldenummer: 92924621.3
(22) Anmeldetag: 28.11.1992
(51) Int. Cl.: B60S 1/48

(54) **WASCHANLAGE, INSBESONDERE FÜR SCHEIBEN EINES KRAFTFAHRZEUGS**
WASHING SYSTEM, IN PARTICULAR FOR MOTOR VEHICLE WINDOW PANES
INSTALLATION DE LAVAGE PARTICULIEREMENT DESTINEE AUX VITRES D'UN VEHICULE AUTOMOBILE

(30) Priorität: 11.12.1991 DE 4140731
(43) Veröffentlichungstag der Anmeldung: 02.02.1994
(73) Patentinhaber: ITT Automotive Europe GmbH, D-60488 Frankfurt am Main (DE)
(72) Erfinder: EGNER-WALTER, Bruno, D-7100 Heilbronn (DE); GLOSS, Hans-Michael, D-7129 Brackenheim-Stockheim (DE); MACH, Jiri, D-7057 Leutenbach (DE)
(86) Internationale Anmeldenummer: EP9202759
(87) Internationale Veröffentlichungsnummer: WO9311980

(56) Entgegenhaltungen:
- EP-A- 0 284 662
- WO-A-92/08627
- DE-A- 2 062 720
- DE-A- 3 342 384
- DE-A- 3 730 006
- DE-U- 9 103 554
- PATENT ABSTRACTS OF JAPAN vol. 9, no. 46 (M-360)(1769) 27. Februar 1985 & JP-A-59 184 045 (NISSAN JIDOSHA K.K.) 19 October 1984

## Beschreibung

Die Erfindung betrifft eine Waschanlage, mit der insbesondere eine Scheibe eines Kraftfahrzeugs gereinigt wird und die die Merkmale aus dem Oberbegriff des Anspruchs 1 aufweist. (Waschanlage, die jener nach der Figur 3 der DE-A-2 062 720 gattungsgemäß ausgebildet ist).

Zum Reinigen der Scheiben von Kraftfahrzeugen vorgesehene Waschanlagen mit je einem Behälter für Waschwasser und einem anderen Behälter für ein Waschmittel sind aus einer Reihe von Druckschriften bekannt. So zeigen z. B. die DE-A-20 62 720 oder die DE-B-29 21 158 eine Waschanlage, bei der jedem der beiden Behälter eine Pumpe zugeordnet ist, die unabhängig von der jeweils anderen Pumpe eingeschaltet werden kann. Bei diesen Waschanlagen ist es also möglich, nur Waschwasser, nur Waschmittel oder Waschwasser und Waschmittel gemeinsam auf eine Scheibe zu spritzen. Insbesondere, wenn nur vorgesehen ist, Waschwasser und Waschmittel immer gemeinsam auf die Scheibe zu Spritzen, ist eine Lösung mit zwei Pumpen aufwendig und teuer.

Aus der DE-A-30 15 348 ist eine Waschanlage bekannt, zu der eine Waschpumpe mit einem Flügelrad gehört, das in entgegengesetzte Drehrichtungen angetrieben werden kann. Bei einem Antrieb in die eine Drehrichtung wird nur Waschwasser aus einem ersten Behälter und bei einem Antrieb des Flügelrads in die entgegengesetzte Drehrichtung nur Waschmittel aus einem zweiten Behälter gefördert. Bei dieser Waschanlage wird zwar nur eine einzige Pumpe dazu verwendet, um beide Flüssigkeiten zu fördern, der Aufbau der Pumpe mit verschiedenen Ventilen sowie der elektrische Schalter zum Umpolen des die Pumpe antreibenden Elektromotors machen diese Lösung jedoch ebenfalls recht teuer. Zudem ist es anders als bei einer Waschanlage mit zwei Pumpen nicht möglich, Waschwasser und Waschmittel zusammen auf eine Scheibe zu spritzen.

In der DE-A-20 62 720 (Figur 3) ist auch eine Waschanlage geoffenbart, bei der zum Fördern der beiden Flüssigkeiten nur eine einzige Pumpe verwendet wird, die die beiden Flüssigkeiten über ein Wegeventil ansaugt. Dieses Ventil erlaubt es nicht nur, zwischen Waschmittel und Waschwasser zu wählen, sondern auch, beide Flüssigkeiten in einem beliebigen Verhältnis zu mischen. Das Ventil kann dabei von Hand, motorisch, magnetisch oder auch pneumatisch zu betätigen sein.

Aus der DE-A-33 42 384 ist eine Waschanlage bekannt, bei der dem Behälter mit Waschmittel eine Membran- oder Kolbenpumpe zugeordnet ist, die beim Einschalten einer Waschpumpe, die Waschwasser fördert, durch den Druck des Waschwassers, der auf der einen Seite des Kolbens bzw. der Membran ansteht, betätigt wird und dabei eine bestimmte Menge des Waschmittels der Waschflüssigkeit zusetzt. Hier wird also zu Beginn eines Waschvorgangs ein Gemisch von Waschwasser und Waschmittel und danach nur noch Waschwasser auf die zu reinigende Scheibe gespritzt.

Wie oben beschrieben gibt es Waschanlagen für Scheiben eines Kraftfahrzeugs, die jeweils einen Behälter für Waschwasser und einen Behälter für ein Waschmittel besitzen und bei denen ein Gemisch von Waschwasser und Waschmittel auf die zu reinigende Scheibe gespritzt werden kann. Es sind auch schon Scheibenwaschanlagen vorgeschlagen worden, bei denen es ausschließlich möglich ist, während des gesamten Waschvorgangs Waschmittel und Waschwasser als Gemisch aus den Waschdüsen austreten zu lassen. Auf den ersten Blick erscheint es dann unnötig, getrennte Behälter für das Waschwasser und das Waschmittel vorzusehen. Es könnte vielmehr ein einziger Behälter für das Gemisch reichen. Allerdings ist dabei zu beachten, daß dann beim Nachfüllen des einzigen vorhandenen Waschflüssigkeitsbehälters das Gemisch vom Besitzer des Fahrzeugs oder einem Beauftragten selbst hergestellt werden muß. Es ist zu erwarten, daß dabei das vom Fahrzeughersteller ermittelte, optimale Mischungsverhältnis nicht erreicht wird. Ist zuviel Waschmittel in der Waschflüssigkeit, so mag dies zwar für die Reinigung der Scheibe ohne Belang sein, es schädigt jedoch in erhöhtem Maße die Umwelt und den Geldbeutel des Fahrzeugeigentümers. Ist zu wenig Waschmittel in der Waschflüssigkeit, so ist eine gute Reinigung der Scheibe nicht mehr gewährleistet. Deshalb ist es auch bei einer solchen Waschanlage, bei der dauernd ein Gemisch aus Waschwasser und Waschmittel gefördert wird, vorteilhaft, für die beiden Flüssigkeiten getrennte Behälter vorzusehen und das Mischungsverhältnis durch eine entsprechende Auslegung der Waschanlage zu erzielen. Dazu ist bereits vorgeschlagen worden, zwischen einer Förderpumpe und den Spritzdüsen eine Venturidüse vorzusehen, in der das Waschmittel dem Waschwasser zugesetzt wird. Durch diese Venturidüse wird jedoch die Leistung der Pumpe merklich beeinflußt. Es ist deshalb in der Erstausrüstung eines Fahrzeugs eine stärkere Pumpe notwendig. Außerdem ist eine Nachrüstung eines Fahrzeugs mit Schwierigkeiten verbunden, da es neben dem Einbau der Venturidüse auch notwendig ist, die Waschpumpe, deren Leistung nun nicht mehr ausreicht, gegen eine stärkere Pumpe auszutauschen. Neben den dadurch verursachten zusätzlichen Kosten ist es auch fraglich, ob diese stärkere Pumpe am selben Ort wie die alte Pumpe eingebaut werden kann.

Der Erfindung liegt die Aufgabe zugrunde, eine Waschanlage zu schaffen, bei der Waschwasser und ein Waschmittel als Gemisch gefördert werden, bei der das Waschmittel immer in der richtigen Dosierung zugemischt wird und bei der das Ansaugen des Waschmittels nur eine geringe Leistung erfordert. Angestrebt wird auch, daß eine Waschanlage mit nur einem Behälter für eine Waschflüssigkeit ohne großen Aufwand und wenigen zusätzlichen Teilen nachträglich in eine Waschanlage umgewandelt werden kann, bei der das Waschwasser und das Waschmittel in getrennten Behältern aufbewahrt und erst bei einer Betätigung der Waschanlage als Gemisch zu den Spritzdüsen gelangen.

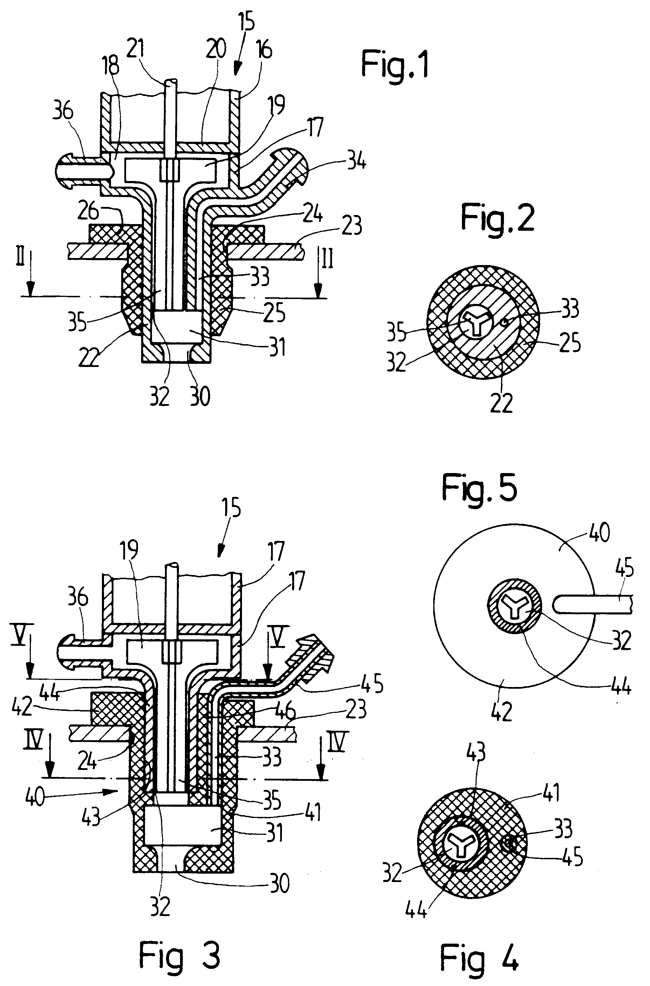

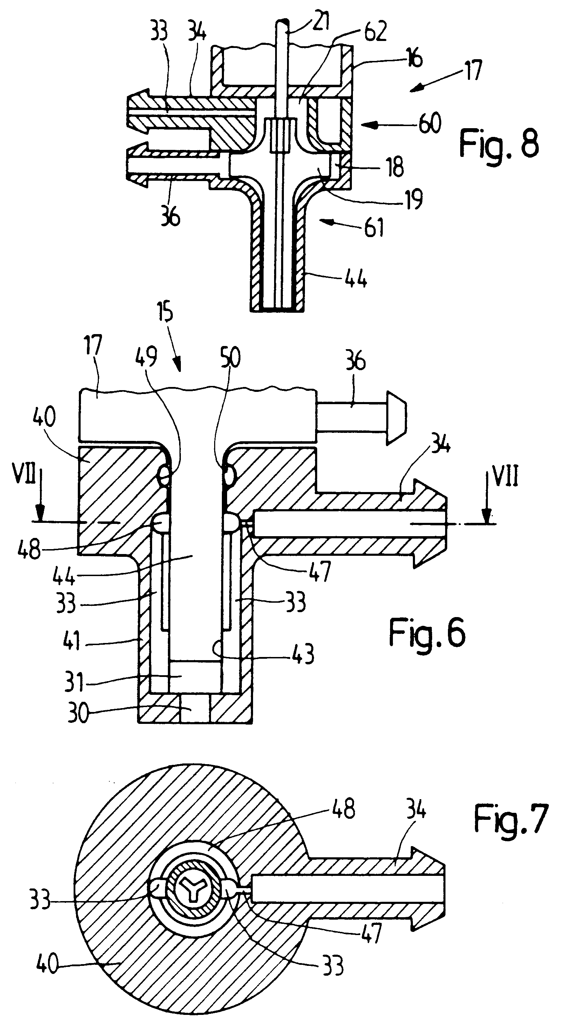

Diese Aufgabe wird für eine Waschanlage mit den Merkmalen aus dem Oberbegriff des Anspruchs 1 dadurch gelöst, daß das Waschmittel entweder an der Eintrittsmündung des in dem Saugstutzen zur Pumpenkammer führenden Saugkanales (Figuren 1, 3, 6) oder an einem anderen Ort innerhalb des Pumpengehäuses in einem Saugbereich der Pumpe (Figuren 8, 9, 10) dem Waschwasser zumischbar ist. Es hat sich gezeigt, daß bei einer solchen Zumischung des Waschwassers im Pumpensaugbereich die Pumpenleistung nur wenig herabgesetzt ist. Während beim Einsetzen einer Venturidüse zwischen der Pumpe und den Waschdüsen im Vergleich zu Waschanlagen ohne Venturidüse Druckverluste bis zu 50% hingenommen bzw. durch eine stärkere Pumpe ausgeglichen werden müssen, treten bei einer erfindungsgemäßen Waschanlage Druckverluste lediglich in Höhe von etwa 10% auf. Dies macht sich in Richtung des von einer Waschdüse abgegebenen Flüssigkeitsstrahles kaum bemerkbar, so daß in einer erfindungsgemäßen Scheibenwaschanlage von der Größe her dieselbe Waschpumpe wie bei bekannten Waschanlagen benutzt werden kann.

Vorteilhafte Ausgestaltungen einer erfindungsgemäßen Waschanlage kann man den Unteransprüchen entnehmen.

Heute in Scheibenwaschanlagen von Kraftfahrzeugen verwendete Waschpumpen ragen üblicherweise mit ihrem Saugstutzen durch eine Öffnung in dem Behälter für Waschwasser in diesen Behälter hinein. In einer bevorzugten Ausführung ist nun gemäß Anspruch 2 das Waschmittel durch diesen Saugkanal des Saugstutzens ansaugbar, wobei das Waschmittel von außerhalb des Behälters für das Waschwasser in dessen Innerem dem Saugkanal zugeführt wird. Um die Anzahl der abzudichtenden Öffnungen in dem Behälter für das Waschwasser gering zu halten, ist es dann besonders günstig, wenn das Waschmittel gemäß Anspruch 3 durch dieselbe Öffnung, durch den der Saugstutzen der Waschpumpe in den Behälter für das Waschwasser ragt, in das Innere dieses Behälters gelangt.

Bei bekannten Pumpen ist der Saugkanal axial und zentrisch zu einem in der Pumpenkammer befindlichen Laufrad angeordnet. Das Laufrad ragt mit einem radial nur mit kurzen Flügeln versehenen Quirl in den Saugkanal hinein, so daß während des Betriebs der Waschpumpe schon im Saugkanal eine spiralförmige Strömung der angesaugten Flüssigkeit erzeugt wird. Gemäß Anspruch 4 ist nun vorgesehen, daß der Zulauf des Waschmittels in den Saugkanal vor dem Quirl liegt. Dadurch wird auf der Länge des Quirls die Strömung der Flüssigkeit nicht mehr gestört.

Besonders vorteilhaft für das Ansaugen des Waschmittels ist es, wenn sich vor dem Zulauf des Waschmittels in den Saugkanal ein Zugang vom Behälter des Waschwassers zum Saugkanal befindet, dessen Querschnitt höchstens so groß wie, vorzugsweise jedoch kleiner als der Querschnitt des Saugkanals ist.

In einer besonders bevorzugten Ausführungsform einer erfindungsgemäß Waschanlage weist die Waschpumpe gemäß Anspruch 7 einen axial und zentrisch zu einem in einer Pumpenkammer befindlichen Laufrad angeordneten Saugkanal und einen parallel zum Saugkanal neben diesem verlaufenden Zuführkanal für das Waschmittel auf, wobei sich der Saugkanal und der Zuführkanal in einem einzigen Stutzen befinden, mit dem die Waschpumpe in eine Öffnung des Behälters für das Waschwasser einsteckbar ist. Bevorzugt ist dieser Stutzen gemäß Anspruch 8 auf seiner Außenseite zentrisch zum Saugkanal ausgebildet. Bei Waschpumpen für Scheibenwaschanlagen von Kraftfahrzeugen ist nämlich neben der Pumpenkammer auch der üblicherweise elektrische Antriebsteil zentrisch zum Saugkanal ausgebildet. Ist nun auch der in den Behälter mit Waschwasser einsteckbare Stutzen mit dem Saugkanal und dem Zuführkanal zentrisch zum Saugkanal ausgebildet, so bleibt die Anordnung der Waschpumpe am Behälter unabhängig davon, in welcher Winkelposition der Stutzen in den Behälter gesteckt wird. Zwar ist eine Waschpumpe wegen eines eventuell die Symmetrie störenden Druckstutzens oder eines Steckers für elektrische Anschlüsse meist ohnehin nur auf einen bestimmten Winkelbereich beschränkt am Waschwasserbehälter montierbar. Dieser Winkelbereich kann jedoch groß genug sein, um bei einem exzentrischen Saugstutzen die Position der Waschpumpe so zu beeinflussen, daß die Montage erschwert oder nicht exakt durchgeführt wird.

Der Durchmesser eines einen Saugkanal und einen Zuführkanal enthaltenden und zentrisch zum Laufrad angeordneten Saugstutzens kann klein gehalten werden, wenn gemäß Anspruch 9 ein Eingangskanal für das Waschmittel in einen um den Saugstutzen herumlaufenden Ringkanal mündet, von dem aus das Waschmittel außen am Saugstutzen entlang bis zum Zulauf in den Saugkanal führbar ist. Vorzugsweise gehen von dem Ringkanal mehrere axiale Kanäle von begrenzter Breite aus, so daß, peripher gesehen, zwischen den Kanälen eine Abstützung des die Kanäle bildenden Materials an dem den Saugkanal umgebenden Stutzen erfolgen kann. Die mehreren axialen Kanäle sind vorzugsweise gleichmäßig um den den Saugkanal enthaltenden Stutzen verteilt, so daß das Waschmittel an mehreren peripher verteilten Stellen in den Saugkanal gelangt und dadurch besonders gut mit dem Waschwasser vermischt wird. Sind insbesondere nur zwei axiale Kanäle vorhanden, so liegen sich diese bezüglich des Saugkanals vorzugsweise diametral gegenüber.

Um herkömmliche Waschanlagen leicht nachrüsten und gleiche Pumpen für verschiedene Waschanlagen verwenden zu können, ist gemäß Anspruch 10 ein Adapter von Vorteil, der eine Aufnahme zum Aufsetzen auf einen Saugstutzen der Waschpumpe und einen in eine Kammer vor dem Saugstutzen mündenden Zuführkanal für das Waschmittel aufweist und der in eine Öffnung in dem Behälter für das Waschwasser einsteckbar ist. Besonders vorteilhaft erscheint es dabei, wenn der Adapter aus Gummi hergestellt ist und die Öffnung in dem Behälter mit ihm abgedichtet werden kann. Der Adapter ersetzt dadurch also die auch bisher schon notwendige Gummidichtung, so daß der Teileaufwand gering ist.

Bei den bisher betrachteten Ausgestaltungen einer erfindungsgemäßen Scheibenwaschanlage für Kraftfahrzeuge wird das Waschmittel durch den Saugkanal angesaugt, durch den auch das Waschwasser in die Pumpenkammer der Waschpumpe gelangt. Demgegenüber ist im Anspruch 13 eine bevorzugte Ausführung angegeben, bei der die Waschpumpe einen in eine Pumpenkammer mit einem Laufrad mündenden Saugkanal für das Waschwasser und einen von diesem Saugkanal unabhängigen Zugang zur Pumpenkammer für das Waschmittel aufweist.

Vorteilhafterweise mündet dann der Saugkanal für das Waschwasser auf der einen Seite des Laufrads in die Pumpenkammer, während das Waschmittel auf der anderen Seite des Laufrads der Pumpenkammer zuführbar ist. Das Laufrad wird dann zweckmäßigerweise als zweiseitiges Flügelrad ausgebildet, dessen Flügel beidseitig mit sich verringerndem Abstand zur Achse des Laufrads axial länger werden.

Der Zugang in die Pumpenkammer für das Waschmittel kann sich auch auf derselben Seite des Laufrads wie derjenige für das Waschwasser und insbesondere radial weiter außen als derjenige für das Waschwasser befinden.

Damit das Waschmittel nicht allmählich in den Behälter für das Waschwasser hineinfließt, wenn die Waschanlage außer Betrieb ist, ist gemäß Anspruch 19 vorgesehen, daß das Waschmittel der Waschpumpe über ein Rückschlagventil zuführbar ist. Die Dosierung des Waschmittels kann durch eine Drosselstelle eingestellt werden, über die das Waschmittel von der Waschpumpe ansaugbar ist.

Mehrere Ausführungsbeispiele einer erfindungsgemäßen Waschanlage sind in den Zeichnungen dargestellt. Anhand der Figuren dieser Zeichnungen wird die Erfindung nun näher erläutert:

Es zeigen:
- Figur 1: einen Schnitt durch eine Waschpumpe mit einem Stutzen, mit dem die Pumpe in einen Behälter für Waschwasser gesteckt ist und der einen Zuführkanal für ein Waschmittel und einen Saugkanal für Waschwasser und das Waschmittel enthält,
- Figur 2: einen Schnitt entlang der Linie II-II aus Figur 1,
- Figur 3: einen Schnitt ähnlich dem aus Figur 1 durch ein zweites Ausführungsbeispiel, bei dem auf einem Saugstutzen der Waschpumpe ein Adapter aufgesetzt ist,
- Figur 4: einen Schnitt entlang der Linie IV-IV aus Figur 3,
- Figur 5: einen Schnitt entlang der Linie V-V aus Figur 3,
- Figur 6: einen Schnitt ähnlich demjenigen aus den Figuren 1 und 3 durch ein drittes Ausführungsbeispiel, bei dem ein Adapter zentrisch auf dem Saugstutzen einer Waschpumpe sitzt,
- Figur 7: einen Schnitt entlang der Linie VII-VII aus Figur 6,
- Figur 8: einen Schnitt durch ein viertes Ausführungsbeispiel, bei dem das Waschmittel unabhängig vom Saugstutzen für das Waschwasser in die Pumpenkammer gelangt,
- Figur 9: eine weitere Ausführung mit einem für das Waschmittel unabhängigen Zugang zur Pumpenkammer und
- Figur 10: ein letzte Ausführungsbeispiel, bei dem das Waschmittel ebenfalls unabhängig vom Waschwasser in die Pumpenkammer gelangt, aber auf derselben Seite des Laufrads wie das Waschwasser zugeführt wird.

In Figur 1 erkennt man eine Waschpumpe 15 mit einem im wesentlichen zylindrischen Gehäuse 16 für einen kleinen Elektromotor und mit einem Pumpengehäuse 17, das in herkömmlicher Weise mit dem Motorgehäuse 16 verbunden ist. Das Pumpengehäuse enthält eine Pumpenkammer 18, in der ein Flügelrad 19 untergebracht ist. Das Flügelrad sitzt verdrehsicher auf einer dicht durch eine Trennwand 20 zwischen dem Motorengehäuse 16 und dem Pumpengehäuse 17 hindurchgeführten Antriebswelle 21 des Elektromotors. In axialer Richtung, also in Richtung der Achse des Flügelrads 19, ist das Pumpengehäuse 17 in einem Stutzen 22 fortgesetzt, mit dem die Waschpumpe 15 in einem Behälter 23 für Waschwasser hineingesteckt ist. Dieser Behälter besitzt dazu eine Öffnung 24, die durch eine Gummidichtung 25, die sich zwischen dem Stutzen 22 und dem Rand der Öffnung 24 befindet und mit einem Außenflansch 26 um die Öffnung 24 herum auch am Behälter 23 anliegt, abgedichtet ist.

Der Stutzen 22 besitzt an seinem vorderen Ende einen verengten Zugang 30, der in eine Kammer 31 mit einem größeren Durchmesser übergeht. Diese Kammer befindet sich innerhalb des Behälters 23. Von ihr geht ein Saugkanal 32 aus, der koaxial zur Achse des Flügelrads 19 verläuft und in die Pumpenkammer 18 mündet. Seitlich neben dem Saugkanal 32 mündet in die Kammer 31 ein Zuführkanal 33 für ein Waschmittel, der außerhalb des Behälters 23 vom Saugkanal 32 wegführt und in einem schräg vom Behälter 23 wegzeigenden Anschlußstutzen 34 für eine nicht näher dargestellte Leitung endet. Über diesen Zuführkanal 33 gelangt also Waschmittel von außerhalb des Behälters 23 in die sich innerhalb des Behälters 23 befindende Kammer 31. Der Durchmesser des Zugangs 30 ist kleiner als der Durchmesser des Saugkanals 32, wodurch das Waschmittel gut angesaugt wird. Insgesamt besitzt der Stutzen 22 einen kreisrunden Außenquerschnitt und ist exzentrisch zur Achse des Flügelrades 19 angeordnet.

Die Flügel des Flügelrads 19 sind zum Saugkanal 32 hin axial verlängert und greifen radial wesentlich verkürzt in den Saugkanal bis zur Kammer 31 hinein. Die Mündung des Zuführkanals 33 in den Saugkanal befindet sich also vor dem Quirl 35, der durch die radial kurzen und in den Saugkanal 32 hineinragenden Flügel des Flügelrads 19 gebildet wird.

Von der Pumpenkammer 18 geht tangential ein Druckstutzen 36 ab, an den eine zu einer oder mehreren Waschdüsen führende Leitung angeschlossen werden kann.

In die Leitung zwischen dem Behälter für das Waschmittel und dem Anschlußstutzen 34 ist ein nicht näher dargestelltes Rückschlagventil eingebaut, durch das verhindert wird, daß bei niedrigem Flüssigkeitsstand im Behälter 23 das Waschmittel von selbst in diesen Behälter fließt. In die Leitung ist auch eine Drosselstelle eingebaut, durch die die Dosierung des Waschmittels im Waschwasser eingestellt wird. Die Drosselstelle kann auch eine Verengung im Zuführkanal 33 sein, die sich z. B. an dessen Einmündung in die Kammer 31 befindet.

Wenn der Elektromotor der Waschpumpe 15 eingeschaltet wird, treibt dieser das Flügelrad 19 und den Quirl 35 an. Über den Zugang 30 zum Behälter 23 wird Waschwasser und über den Zuführkanal 33 Waschmittel angesaugt. Innerhalb des Saugkanals 32 und in der Pumpenkammer 18 vermischen sich das Waschwasser und das Waschmittel miteinander, so daß über den Druckstutzen 36 ein Gemisch von Waschwasser und Waschmittel an die Waschdüsen abgegeben und von diesen auf die Scheibe eines Kraftfahrzeugs gespritzt wird. Die Dosierung des Waschmittels bleibt dabei immer gleich, während sie bei einer Mischung von Waschwasser und Waschmittel schon im Vorratsbehälter davon abhinge, womit und mit welchen Mengen an Waschwasser und Waschmittel man den Vorratsbehälter nachfüllt.

Die Ausführung nach den Figuren 3 bis 5 unterscheidet sich von derjenigen nach den Figuren 1 und 2 im wesentlichen dadurch, daß der Zuführkanal 33 für das Waschmittel nicht einstückig im Pumpengehäuse 17 ausgebildet ist, sondern sich in einem Adapter 40 aus Gummi befindet. Der Adapter ist als Gummipfropfen mit einem Stutzen 41, mit dem er durch eine Öffnung 24 in den Behälter 23 hineinragt und mit einem Außenflansch 42 ausgebildet, mit dem er außen um die Öffnung 24 herum auf dem Behälter 23 aufliegt. Der Adapter 40 besitzt eine axiale Aufnahme 43, die zentrisch zur Achse des Flügelrads 19 verläuft und in die ein einstückig mit dem Pumpengehäuse 17 ausgebildeter Saugstutzen 44 hineingesteckt ist. Der Zuführkanal 33 befindet sich in einem Metallrohr 45, das in eine neben der Aufnahme 43 parallel zu diesei verlaufenden Aufnahme 46 geringeren Durchmessers hineingesteckt ist und außerhalb des Behälters 23 schräg vom Behälter 23 wegweist. Vor dem Saugstutzen 44 und dem Zuführkanal 33 befindet sich im Adapter 40 die Kammer 31, in die wiederum ein gegenüber dem Durchmesser des Saugkanals 32 im Saugstutzen 44 verengter Zugang 30 führt. Ähnlich wie bei der Ausführung nach den Figuren 1 und 2 der Stutzen 22 ist auch bei der Ausführung nach den Figuren 3 bis 5 der Stutzen 41 des Adapters 40 exzentrisch zur Achse des Flügelrads 19 angeordnet.

Im übrigen ist der Aufbau des Flügelrads 19 mit dem Quirl 35, der Aufbau des Pumpengehäuses 17 und die Anordnung des Druckstutzens 36 genauso wie bei der Ausführung nach den Figuren 1 und 2. Der Adapter aus Gummi wird auch dazu verwendet, um die Öffnung 24 im Behälter 23 abzudichten, so daß eine zusätzliche Gummidichtung nicht notwendig ist. Auch zwischen dem Saugstutzen 44 und dem Adapter 40 ist keine zusätzliche Dichtung notwendig.

Auch bei der Ausführung nach den Figuren 6 und 7 ist ein Adapter 40 auf den axial und zentrisch verlaufenden Saugstutzen 44 eines Pumpengehäuses 17, von dem im übrigen noch der Druckstutzen 36 erkennbar ist, aufgesteckt. Der Adapter 40 hat wiederum eine pfropfenartige Gestalt mit einem Stutzen 41, mit dem er in eine Öffnung eines in den Figuren 6 und 7 nicht näher dargestellten Behälters für Waschwasser hindurchgesteckt werden kann. Anders als bei der Ausführung nach den Figuren 3 bis 5 ist der Adapter allerdings nun aus einem festen Kunststoff hergestellt. Außerdem ist der Stutzen 41 koaxial zum Saugstutzen 44 angeordnet. Der Anschlußstutzen 34 für eine zu dem Behälter mit dem Waschmittel führende Leitung verläuft radial zum Stutzen 41. Der Kanal in ihm mündet über eine Drossel 47 in einen Ringkanal 48, der in der Aufnahme 43 des Adapters 40 für den Saugstutzen 44 ausgebildet ist. An der Mündungsstelle der Drossel 47 in den Ringkanal 48 und diametral gegenüberliegend geht vom Ringkanal 48 jeweils ein axialer Zuführkanal 33 aus, der am Saugstutzen 44 entlang bis in eine sich vor diesem Saugstutzen befindende und im Stutzen 41 des Adapters 40 ausgebildete Kammer 31 mündet. Der Innendurchmesser der Aufnahme 43 entspricht nur im vorderen Bereich des Saugstutzens 44 dessen Außendurchmesser. Zum Ringkanal 48 hin ist der Durchmesser der Aufnahme 43 größer als der Außendurchmesser des Saugstutzens 44, so daß dort die Zuführkanale 33 weniger tief erscheinen und das Waschmittel um den gesamten Saugstutzen 44 herumfließen kann. Allerdings kann das Waschmittel letztendlich nur durch die Kanäle 33 in die Kammer 31 gelangen.

Damit keine Flüssigkeit zwischen dem Adapter 40 und dem Pumpengehäuse 17 nach außen dringt, besitzt der Adapter 40 oberhalb des Ringkanals 48 einen weiteren Ringkanal 49, in den ein O-Ring 50 eingelegt ist, der am Saugstutzen 44 anliegt.

Die Waschpumpe nach Figur 8 besitzt wiederum ein Motorengehäuse 16 und ein Pumpengehäuse 17 mit einer Pumpenkammer 18, in der sich ein Flügelrad 19 befindet. Das Pumpengehäuse besitzt ein Oberteil 60 und ein Unterteil 61, wobei dieses Unterteil 61 weitgehend dem Pumpengehäuse der Ausführungen nach den Figuren 3 bis 5 bzw. 6 und 7 entspricht. Das Unterteil 61 hat also einen Saugstutzen 44, mit dem die Waschpumpe in einen Waschwasserbehälter gesteckt werden kann, und einen Druckstutzen 36, an den eine zu einer oder mehreren Waschdüsen führende Leitung angeschlossen werden kann. Zwischen das Motorgehäuse 16 und das Unterteil 61 des Pumpengehäuses 17 ist das Oberteil 60 des Pumpengehäuses 17 eingefügt, das mit einem radial wegstehenden Anschlußstutzen 34 versehen ist, auf den ein zu einem Behälter mit einem Waschmittel führender Schlauch aufgesteckt werden kann.

Der in dem Anschlußstutzen 34 vorhandene Zuführkanal 33 führt bis in die Nähe der Antriebswelle 21 und mündet dort in einen zum Motorgehäuse 16 hin zeigenden, zentrischen Trichter 62 der Pumpenkammer 18. Das Flügelrad 19 besitzt nun beidseits der Pumpenkammer 18 radial kurze Flügel, wobei diese auf der Seite des Trichters 62 axial wesentlich kürzer als auf der Seite des Saugstutzens 44 sind. Auf jeden Fall ragen die Flügel auch in den Trichter 62 hinein.

Wenn die Waschpumpe eingeschaltet wird, so saugt sie über den Stutzen 34 Waschmittel und über den Stutzen 44 Waschwasser an. In der Pumpenkammer werden die beiden Flüssigkeiten miteinander vermischt und über den Druckstutzen 36 als Gemisch an die Waschdüse abgegeben.

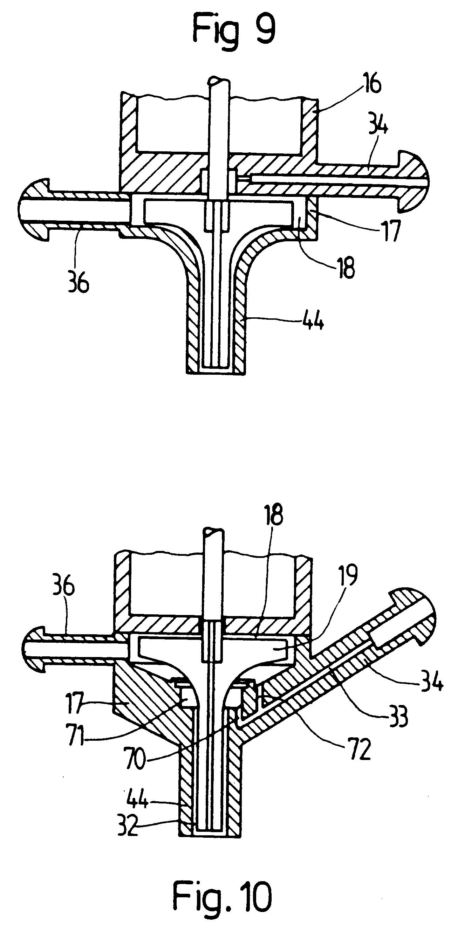

Auch bei der Ausführung nach Figur 9 wird das Waschmittel auf der dem Saugstutzen 44 gegenüberliegenden Seite der Pumpenkammer 18 zugeführt. Anders als bei der Ausführung nach Figur 8 befindet sich nun der Anschlußstutzen 34 im Motorengehäuse 16, so daß das Pumpengehäuse 17 wieder als einteiliges Bauteil hergestellt werden kann.

Auch bei der Ausführung nach Figur 10 wird das Waschmittel unabhängig vom Saugstutzen 44 für das Waschwasser über einen Anschlußstutzen 34 in die Pumpenkammer 18 geführt. Wasser und Waschmittel gelangen nun auf derselben Seite des Flügelrads 19 in die Pumpenkammer 18. Sowohl der Anschlußstutzen 34 als auch der Druckstutzen 36 befinden sich am Pumpengehäuse 17, das jedoch anders als bei der Ausführung nach Figur 8, trotzdem einteilig ausgebildet ist.

In Figur 10 sind zwei Möglichkeiten der Mündung eines Zuführkanals 33 für das Waschmittel in die Pumpenkammer 18 angedeutet. Die eine Mündung 70 liegt nahe an der Achse des Flügelrads 19 und ist durch eine flügelradnahe radiale Erweiterung 71 des Saugkanals 32 möglich. Die andere Mündung 72 führt radial weiter außen direkt in die Pumpenkammer 18.

## Patentansprüche

1. Waschanlage, insbesondere für Scheiben eines Kraftfahrzeuges, mit einem Behälter (23) für Waschwasser und mit einem Behälter für ein Waschmittel und mit einer Waschpumpe (15), die ein Pumpengehäuse (17) mit einer Pumpenkammer (18) und einen Saugstutzen (22,44) mit einem zu der Pumpenkammer (18) führenden Saugkanal (32) sowie einen Druckstutzen (36) aufweist, wobei von der Waschpumpe (15) Waschwasser aus dem einen Behälter (23) ansaugbar, Waschmittel aus dem anderen Behälter zumischbar und ein Gemisch von Waschwasser und Waschmittel zu einer Waschdüse förderbar ist, dadurch **gekennzeichnet,** daß das Waschmittel an der Eintrittsmündung des in dem Saugstutzen (22,44) zur Pumpenkammer (18) führenden Saugkanales (32) (Figur 1, 3, 6) oder an einem anderen Ort innerhalb des Pumpengehäuses (17) (Figur 8, 9, 10) in einem Saugbereich der Waschpumpe (15) dem Waschwasser zumischbar ist.

2. Waschanlage nach Anspruch 1, dadurch gekennzeichnet, daß die Waschpumpe (15) mit dem Saugstutzen (22,44) durch eine Öffnung (34) in den Behälter (23) für das Waschwasser in diesen hineinragt und daß das Waschmittel von außerhalb dieses Behälters (23) in dessen Innerem dem Saugkanal (32) zugeführt wird.

3. Waschanlage nach Anspruch 2, dadurch gekennzeichnet, daß das Waschmittel durch dieselbe Öffnung (24), durch den der Saugstutzen (22,44) der Waschpumpe (15) in den Behälter (23) ragt, in das Innere des Behälters (23) gelangt.

4. Waschanlage nach einem vorhergehenden Anspruch, dadurch gekennzeichnet, daß der Saugkanal (32) axial und zentrisch zu einem in der Pumpenkammer (18) befindlichen Laufrad (19) angeordnet ist, daß das Laufrad (19) mit einem mit radial nur kurzen Flügeln versehenen Quirl (35) in den Saugkanal (32) hineinragt und daß der Zulauf des Waschmittels in den Saugkanal (32) vor diesem Quirl (35) liegt.

5. Waschanlage nach einem vorhergehenden Anspruch, dadurch gekennzeichnet, daß sich vor dem Zulauf des Waschmittels in den Saugkanal (32) ein Zugang (30) vom Behälter (23) zum Saugkanal (32) befindet, dessen Querschnitt vorzugsweise höchstens so groß wie, insbesondere aber kleiner als der Querschnitt des Saugkanals (32) ist.

6. Waschanlage nach Anspruch 5, dadurch gekennzeichnet, daß ein Zuführkanal (33) für das Waschmittel parallel zum Saugkanal (32) neben diesem verläuft und axial in eine zwischen dem Zugang (30) und dem Saugkanal (32) angeordnete Kammer (31) mit einem gegenüber dem Saugkanal (32) größeren Querschnitt mündet.

7. Waschanlage nach einem vorhergehenden Anspruch, dadurch gekennzeichnet, daß die Waschpumpe (15) einen axial und zentrisch zu einem in einer Pumpenkammer (18) befindlichen Laufrad (19) angeordneten Saugkanal (32) aufweist, daß ein Zuführkanal (33) für das Waschmittel parallel zum Saugkanal (32) neben diesem verläuft und daß die Waschpumpe (15) mit einem den Saugkanal (32) und den Zuführkanal (33) enthaltenden Stutzen (41) in eine Öffnung (24) des Behälters (23) für das Waschwasser einsteckbar ist.

8. Waschanlage nach Anspruch 7, dadurch gekennzeichnet, daß der Stutzen (41) auf seiner Außenseite zentrisch zum Saugkanal (32) ausgebildet ist.

9. Waschanlage nach Anspruch 8, dadurch gekennzeichnet, daß ein Eingangskanal für das Waschmittel in einen um den Saugstutzen (44) herumlaufenden Ringkanal (48) mündet, von dem aus das Waschmittel vorzugsweise in mehreren, axialen Kanälen (33) von begrenzter Breite außen am Saugstutzen (44) entlang bis zum Zulauf in den Saugkanal (32) führbar ist.

10. Waschanlage nach einem vorhergehenden Anspruch, gekennzeichnet durch einen Adapter (40), der eine Aufnahme (43) zum Aufsetzen auf einen Saugstutzen (44) der Waschpumpe (15) und einen in eine Kammer (31) vor dem Saugstutzen (44) mündenden Zuführkanal (33) für das Waschmittel aufweist und der in eine Öffnung (24) in dem Behälter (23) für das Waschwasser einsteckbar ist.

11. Waschanlage nach Anspruch 10, dadurch gekennzeichnet, daß der Adapter (40) aus Gummi hergestellt ist und daß die Öffnung (24) in dem Behälter (23) mit dem Adapter (40) abdichtbar ist.

12. Waschanlage nach Anspruch 11, dadurch gekennzeichnet, daß in einen Kanal (46) des Adapters (40) ein insbesondere metallisches Rohr (45) als Zuführkanal (33) für das Waschmittel eingesteckt ist.

13. Waschanlage nach Anspruch 1, dadurch gekennzeichnet, daß die Waschpumpe (15) einen in eine Pumpenkammer (18) mit einem Laufrad (19) mündenden Saugkanal (32) für das Waschwasser und einen von diesem Saugkanal (32) unabhängigen Zugang (33) zur Pumpenkammer (18) für das Waschmittel aufweist.

14. Waschanlage nach Anspruch 13, dadurch gekennzeichnet, daß der Saugkanal (32) für das Waschwasser auf der einen Seite des Laufrads (19) insbesondere zentrisch zu diesem axial in die Pumpenkammer (18) mündet und daß das Waschmittel auf der anderen Seite des Laufrads (19) insbesondere zentrisch zu diesem der Pumpenkammer (18) zuführbar ist.

15. Waschanlage nach Anspruch 14, dadurch gekennzeichnet, daß das Laufrad (19) ein Flügelrad ist, dessen Flügel beidseitig mit sich verringerndem Abstand zu seiner Achse axial länger werden.

16. Waschanlage nach einem der Ansprüche 13 bis 15, dadurch gekennzeichnet, daß die Waschpumpe (15) ein Pumpengehäuse (17) mit einem Unterteil (61) und einem Oberteil (60) zwischen dem Unterteil (61) und einem Motorengehäuse (16) besitzt und daß sich am Unterteil (61) des Pumpengehäuses (17) ein Saugstutzen (44) für Waschwasser und im Oberteil (60) des Pumpengehäuses (17) ein Zuführkanal (33) für das Waschmittel befindet.

17. Waschanlage nach einem der Ansprüche 13 bis 15, dadurch gekennzeichnet, daß die Waschpumpe (15) ein Pumpengehäuse (17) und ein Motorengehäuse (16) besitzt und daß sich am Pumpengehäuse (17) ein Saugstutzen (44) für Waschwasser und am Motorengehäuse (16) ein Zuführkanal (33) für ein Waschmittel befindet.

18. Waschanlage nach Anspruch 13, dadurch gekennzeichnet, daß der Saugkanal (32) für das Waschwasser auf der einen Seite des Laufrads (19) insbesondere zentrisch zu diesem axial in die Pumpenkammer (18) mündet und daß sich der Zugang (70, 72) in die Pumpenkammer (18) für das Waschmittel auf derselben Seite des Laufrads (19) wie derjenige für das Waschwasser und insbesondere radial weiter außen befindet.

19. Waschanlage nach einem vorhergehenden Anspruch, dadurch gekennzeichnet, daß das Waschmittel der Waschpumpe (15) über ein Rückschlagventil zuführbar ist.

20. Waschanlage nach einem vorhergehenden Anspruch, gekennzeichnet durch eine Drosselstelle (47), über die das Waschmittel von der Waschpumpe (15) ansaugbar ist.

21. Waschpumpe (15) einer Waschanlage mit den Merkmalen aus einem vorhergehenden Anspruch.

22. Adapter (40) für eine Waschpumpe (15) einer Waschanlage, der die Merkmale aus einem der Ansprüche 11 bis 13 aufweist.

## Claims

1. A washing system, more particularly for windshields of an automotive vehicle, including a tank (23) for washing water and a tank for holding washing powder, and a washing pump (15) comprising a pump housing (17) with a pump chamber (18) and an intake piece (22, 44) and an intake channel (32) leading to the pump chamber (18), and a pressure joint (36), wherein the washing pump (15) serves to take in washing water from the one tank (23), to add washing powder from the other tank to the washing water and to transport a mixture of washing water and washing powder to a washing nozzle,
**characterized** in that the washing powder at the port of the intake channel (32), which leads in the intake piece (22, 44) to the pump chamber (18), (Figures 1, 3, 6) or at any other location within the pump housing (17) (Figures 8, 9, 10) can be added to the washing water in the intake area of the washing pump (15).

2. A washing system as claimed in claim 1,
**characterized** in that the intake piece (22, 44) of the washing pump (15) projects through an opening (34) into the tank (23) for the washing water, and in that the washing powder is led to the intake channel (32) from outside of this tank (23) through its inside.

3. A washing system as claimed in claim 2,
**characterized** in that the washing powder is conveyed to the inside of the tank (23) through the same opening (24) through which the intake piece (22, 44) of the washing pump (15) extends into the tank (23).

4. A washing system as claimed in any one of the preceding claims,
**characterized** in that the intake channel (32) is arranged axially and centrically to an impeller (19) situated in the pump chamber (18), in that the impeller (19) extends into the intake channel (32) by means of a twirling stick (35) provided with radially only short vanes, and in that the admission of the washing powder into the intake channel (32) lies in front of this twirling stick (35).

5. A washing system as claimed in any one of the preceding claims,
**characterized** in that before the inlet of the washing powder into the intake channel (32) an access (30) from the tank (23) to the intake channel (32) is situated, the cross-section of which, preferably, is at most as large as, but especially smaller than, the cross-section of the intake channel (32).

6. A washing system as claimed in claim 5,
**characterized** in that a supply channel (33) for the washing powder runs in parallel to the intake channel (32) next to it and opens axially into a chamber (31) of a cross-section larger than the intake channel (32) and being arranged between the access (30) and the intake channel (32).

7. A washing system as claimed in any one of the preceding claims,
**characterized** in that the washing pump (15) has an intake channel (32) arranged axially and centrically to an impeller (19) situated in a pump chamber (18), in that a supply channel (33) for the washing powder runs in parallel to the intake channel (32) next to it, and in that the washing pump (15) with a connection piece (41) containing the intake channel (32) and the supply channel (33) can be inserted in an opening (24) of the tank (23) for the washing water.

8. A washing system as claimed in claim 7,
**characterized** in that the connection piece (41) is arranged centrically to the intake channel (32) at its outside.

9. A washing system as claimed in claim 8,
**characterized** in that an inlet channel for the washing powder opens into a ring channel (48) surrounding the intake piece (44), from which ring channel (48) the washing powder can be preferably conveyed in several axial channels (33) of limited width at the outside of the intake piece (44) up to the port of the intake channel (32).

10. A washing system as claimed in any one of the preceding claims,
**characterized** by an adapter (40) comprising a recess (43) for placing on an intake piece (44) of the washing pump (15) and a supply channel (33) for the washing powder opening into a chamber (31) in front of the intake piece (44), which adapter can be inserted in an opening (24) in the tank (23) for the washing water.

11. A washing system as claimed in claim 10,
**characterized** in that the adapter (40) is made of rubber, and in that the opening (24) in the tank (23) can be sealed by means of the adapter (40).

12. A washing system as claimed in claim 11,
**characterized** in that an especially metallic pipe (45) is inserted into a channel (46) of the adapter (40) as supply channel (33) for the washing powder.

13. A washing system as claimed in claim 1,
**characterized** in that the washing pump (15) comprises an intake channel (32) for the washing water opening into a pump chamber (18) with an impeller (19) and comprises a supply channel (33) to the pump chamber (18) for the washing powder independently of this intake channel (32).

14. A washing system as claimed in claim 13,
**characterized** in that the intake channel (32) of the washing water extends on the one side of the impeller (19), in particular centrically relative to it, and terminates axially into the pump chamber (18), and in that the washing powder can be supplied to the pump chamber (18) on the other side of the impeller (19), in particular centrically to the impeller.

15. A washing system as claimed in claim 14,
**characterized** in that the impeller (19) is an impeller wheel, the vanes of which become axially longer on both sides with the distance to its axis decreasing.

16. A washing system as claimed in any one of the claims 13 to 15,
**characterized** in that the washing pump (15) includes a pump housing (17) with a bottom part (61) and a top part (60) between the bottom part (61) and a motor housing (16), and in that at the bottom part (61) of the pump housing (17) an intake piece (44) for washing water and in the top part (60) of the pump housing (17) a supply channel (33) for the washing powder is situated.

17. A washing system as claimed in any one of the claims 13 to 15,
**characterized** in that the washing pump (15) includes a pump housing (17) and a motor housing (16), and in that an intake piece (44) for washing water is situated at the pump housing (17) and a supply channel (33) for the washing powder is arranged at the motor housing (16).

18. A washing system as claimed in claim 13,
**characterized** in that the intake channel (32) for the washing water opens axially into the pump chamber (18) on the one side of the impeller (19), in particular centrically thereto, and in that the access (70, 72) to the pump chamber (18) for the washing powder is situated on the same side of the impeller (19) as the one for the washing water and, in particular, radially farther outside.

19. A washing system as claimed in any one of the preceding claims,
**characterized** in that the washing powder can be supplied to the washing pump (15) by way of a non-return valve.

20. A washing system as claimed in any one of the preceding claims,
**characterized** by a restrictor (47) through which the washing powder can be taken in by the washing pump (15).

21. A washing pump (15) of a washing system including the features of any one of the preceding claims.

22. An adapter (40) for a washing pump (15) of a washing system including the features of any one of claims 11 to 13.

## Revendications

1. Dispositif de lavage, notamment pour vitre de véhicule automobile, comprenant un réservoir (23) prévu pour l'eau de lavage, un réservoir prévu pour un agent de lavage et une pompe de lavage (15) qui comprend un boîtier de pompe (17), comportant une chambre de pompe (18), un embout d'aspiration (22, 44), comportant un conduit d'aspiration (32) qui mène à la chambre de pompe (18), et un embout de refoulement (36), la pompe de lavage (15) permettant d'aspirer de l'eau de lavage provenant du premier réservoir (23), de mélanger de l'agent de lavage provenant du second réservoir et de refouler un mélange d'eau de lavage et d'agent de lavage vers un gicleur de lavage, caractérisé en ce que l'agent de lavage peut être ajouté et mélangé à l'eau de lavage soit à l'emplacement d'entrée par lequel débouche le conduit d'aspiration (32) situé dans l'embout d'aspiration (22, 44) et menant à la chambre de pompe (18) (figures 1, 3, 6), soit en un autre emplacement à l'intérieur du boîtier de pompe (17) (figures 8, 9, 10), dans une zone d'aspiration de la pompe de lavage (15).

2. Dispositif de lavage selon la date la revendication 1, caractérisé en ce que, par son embout d'aspiration (22, 44), la pompe de lavage (15) fait saillie dans le réservoir d'eau de lavage (23) en traversant une ouverture (24) pratiquée dans ce réservoir et en ce que l'agent de lavage est amené au conduit d'aspiration (32) en passant de l'extérieur du réservoir (23) à l'intérieur de ce dernier.

3. Dispositif de lavage selon la revendication 2, caractérisé en ce que l'agent de lavage parvient à l'intérieur du réservoir (23) en passant par la même ouverture (24) par laquelle l'embout d'aspiration (22, 44) de la pompe de lavage (15) fait saillie dans le réservoir (23).

4. Dispositif de lavage selon l'une des revendications précédentes, caractérisé en ce que le conduit d'aspiration (32) est disposé axialement et d'une manière centrée vis-à-vis d'un rotor (19) situé dans la chambre de pompe (18), en ce que le rotor (19) fait saillie dans le conduit d'aspiration (32) par un mélangeur (35) pourvu d'ailettes qui n'ont qu'une faible dimension radiale et en ce que l'arrivée de l'agent de lavage dans le conduit d'aspiration (32) a lieu en avant de ce mélangeur (35).

5. Dispositif de lavage selon l'une des revendications précédentes, caractérisé en ce qu'un accès (30) du réservoir (23) au conduit d'aspiration (32) est situé en avant de l'arrivée de l'agent de lavage dans le conduit d'aspiration (32), la section transversale de cet accès (30) étant de préférence au maximum égale, notamment inférieure, à la section transversale du conduit d'aspiration (32).

6. Dispositif de lavage selon la revendication 5, caractérisé en ce qu'un conduit d'introduction (33) prévu pour l'agent de lavage s'étend parallèlement au conduit d'aspiration (32) à côté de ce dernier et débouche axialement dans une chambre (31) qui est située entre l'accès (30) et le conduit d'aspiration (32) et qui a une plus grande section transversale que le conduit d'aspiration (32).

7. Dispositif de lavage selon l'une des revendications précédentes, caractérisé en ce que la pompe de lavage (15) comporte un conduit d'aspiration (32) à disposition axiale et centré vis-à-vis d'un rotor (19) disposé dans une chambre de pompe (18), en ce qu'un conduit d'introduction (33) prévu pour l'agent de lavage s'étend parallèlement au conduit d'aspiration (32) à côté de ce dernier et en ce que la pompe de lavage (15) est agencée de façon à pouvoir être emboîtée par un embout (41), contenant le conduit d'aspiration (32) et le conduit d'introduction (33), dans une ouverture (24) du réservoir (23) prévu pour l'eau de lavage.

8. Dispositif de lavage selon la revendication 7, caractérisé en ce que l'embout (41) est réalisé suivant sa surface extérieure de manière à être centré vis-à-vis du conduit d'aspiration (32).

9. Dispositif de lavage selon la revendication 8, caractérisé en ce qu'un conduit d'entrée prévu pour l'agent de lavage débouche dans un conduit annulaire (48) qui fait tout le tour de l'embout d'aspiration (44) et à partir duquel l'agent de lavage peut être envoyé, de préférence par plusieurs conduits axiaux (33) de largeur limitée, le long de l'embout d'aspiration (34) et à l'extérieur de ce dernier, jusqu'à l'accès dans le conduit d'aspiration (32).

10. Dispositif de lavage selon l'une des revendications précédentes, caractérisé par un adaptateur (40) qui comporte un logement (43), permettant l'emboîtement sur un embout d'aspiration (44) de la pompe de lavage (15), et un conduit d'introduction (33) prévu pour l'agent de lavage et débouchant dans une chambre (31) située en avant de l'embout d'aspiration (44), l'adaptateur (40) étant agencé de façon à pouvoir être emboîté dans une ouverture (24) pratiquée dans le réservoir (23) prévu pour l'eau de lavage.

11. Dispositif de lavage selon la revendication 10, caractérisé en ce que l'adaptateur (40) est en caoutchouc et en ce que l'étanchéité de l'ouverture (24) pratiquée dans le réservoir (23) peut être assurée par l'adaptateur (40).

12. Dispositif de lavage selon la revendication 11, caractérisé en ce qu'un tube (45), notamment métallique, est emboîté, en tant que conduit d'introduction (33) pour l'agent de lavage, dans un conduit (46) de l'adaptateur (40).

13. Dispositif de lavage selon la revendication 1, caractérisé en ce que la pompe de lavage (15) comprend un conduit d'aspiration (32) pour l'eau de lavage, débouchant dans une chambre de pompe (18) qui comporte un rotor (19), et, indépendant de ce conduit d'aspiration (32), un accès (33) à la chambre de pompe (18) qui est prévu pour l'agent de lavage.

14. Dispositif de lavage selon la revendication 13, caractérisé en ce que le conduit d'aspiration (32) prévu pour l'eau de lavage débouche axialement dans la chambre de pompe (18) sur un premier côté du rotor (19), notamment d'une manière centrée vis-à-vis de ce rotor, et en ce que l'agent de lavage peut être amené à la chambre de pompe (18) sur l'autre côté du rotor (19), notamment d'une manière centrée vis-à-vis de ce rotor.

15. Dispositif de lavage selon la revendication 14, caractérisé en ce que le rotor (19) est une roue dont les ailettes sont, des deux côtés, plus longues suivant la direction axiale lorsque la distance diminue vis vis-à-vis de son axe.

16. Dispositif de lavage selon l'une des revendications 13 à 15, caractérisé en ce que la pompe de lavage (15) comprend un boîtier de pompe (17) comportant une partie inférieure (61) et une partie supérieure (60) disposée entre la partie inférieure (61) et un boîtier de moteur (16) et en ce qu'à la partie inférieure (61) du boîtier de pompe (17), il est prévu un embout d'aspiration (44) pour l'eau de lavage et, dans la partie supérieure (60) du boîtier de pompe (17), un conduit d'introduction (33) pour l'agent de lavage.

17. Dispositif de lavage selon l'une des revendications 13 à 15, caractérisé en ce que la pompe de lavage (15) comprend un boîtier de pompe (17) et un boîtier de moteur (16) et en ce que, sur le boîtier de pompe (17), il est prévu un embout d'aspiration (44) pour l'eau de lavage et, sur le boîtier de moteur (16), un conduit d'introduction (33) pour un agent de lavage.

18. Dispositif de lavage selon la revendication 13, caractérisé en ce que le conduit d'aspiration (32) prévu pour l'eau de lavage débouche axialement dans la chambre de pompe (18) sur un premier côté du rotor (19), notamment d'une manière centrée vis-à-vis de ce rotor, et en ce que l'accès (70, 72) dans la chambre de pompe (18) qui est prévu pour l'agent de lavage est situé sur le même côté du rotor (19) que celui prévu pour l'eau de lavage, et est notamment situé plus loin vers l'extérieur dans le sens radial.

19. Dispositif de lavage selon l'une des revendications précédentes, caractérisé en ce que l'agent de lavage peut être amené à la pompe de lavage (15) par l'intermédiaire d'une valve antiretour.

20. Dispositif de lavage selon l'une des revendications précédentes, caractérisé par un étranglement (47) par l'intermédiaire duquel l'agent de lavage peut être aspiré par la pompe de lavage (15).

21. Pompe de lavage (15) d'un dispositif de lavage comportant les particularités de l'une des revendications précédentes.

22. Adaptateur (40) pour une pompe de lavage (15) d'un dispositif de lavage comportant les particularités de l'une des revendications 11 à 13.
